# FASCICULE DE BREVET EUROPEEN

(11) **EP 3 350 459 B1**
(45) Date de publication et mention de la délivrance du brevet: **29.09.2021**
(21) Numéro de dépôt: 16757321.1
(22) Date de dépôt: 02.08.2016
(51) Int. Cl.: F16B 11/00

(54) **PROCÉDÉ DE COLLAGE DE TÔLES D'UN VÉHICULE AUTOMOBILE**
VERFAHREN ZUM VERBINDEN VON BLECHEN EINES KRAFTFAHRZEUGS
METHOD FOR BONDING METAL SHEETS OF A MOTOR VEHICLE

(30) Priorité: 18.09.2015 FR 1558840
(43) Date de publication de la demande: 25.07.2018
(73) Titulaire: PSA Automobiles SA, 78300 Poissy (FR)
(72) Inventeur: CADET, Stephane, 70110 Les Magny (FR); FERRAND, Stephane, 78760 Jouars Pontchartrain (FR)
(74) Mandataire: Fernandez, Francis Lionel
(86) Numéro de dépôt international: PCT/FR2016/052016
(87) Numéro de publication internationale: WO 2017/046465

(56) Documents cités:
- DE-A1- 3 536 806
- DE-A1- 19 649 762
- DE-A1-102007 022 132
- DE-A1-102013 000 629
- JP-A- H04 152 127
- US-A1- 2009 294 034
- US-A1- 2010 314 511

## Description

L'invention concerne le collage de tôles d'un véhicule automobile. Plus précisément, l'invention traite d'un procédé de collage de tôles de caisse dont l'une est enduite de colle avant chargement des tôles l'une contre l'autre.

Une caisse de véhicule automobile comprend une pluralité de tôles fixées les unes aux autres. Le collage permet d'assurer cette fixation de manière durable et robuste. Par ailleurs, le collage offre des liaisons à moindre coût et simples à automatiser. Ce mode de liaison se prête également aux enceintes peu accessibles. Il permet en outre de travailler à température ambiante et de préserver les tôles ou leur éventuel revêtement.

Le document FR 2 949 747 B1 présente un véhicule automobile montrant un côté d'habitacle et une cuvette recevant un feu arrière. Le côté d'habitacle et la cuvette sont réalisés à l'aide de tôles embouties qui sont jointes au niveau de bords complémentaires. Leur liaison s'effectue à l'aide d'un cordon de colle entre les bords complémentaires ; ce qui offre l'avantage d'assurer une étanchéité. Cependant, une telle liaison par cordon de colle reste compliquée à réaliser en raison des manipulations préalables au collage. En effet, les tôles doivent être mises en correspondances, puis plaquée l'une contre l'autre.

Durant cette phase, la colle risque de toucher la tôle antagoniste avant d'être correctement alignées. Le cordon de colle peut être altéré si bien que la résistance du collage s'amoindrit. Le document JP H04 152127 A divulgue un procédé de collage selon l'art antérieur.

L'invention a pour objectif de résoudre au moins un des problèmes posés par l'art antérieur. Plus précisément, l'invention a pour objectif de simplifier le collage d'éléments. L'invention a également pour objectif de préserver une couche de colle avant le collage effectif d'éléments à coller subissant des manipulations.

L'invention a pour objet un procédé de collage d'au moins deux éléments d'une structure de véhicule, notamment d'un véhicule automobile, le procédé comprenant les étapes suivantes : (a) fourniture ou fabrication d'un premier élément, et d'un deuxième élément recouvert de colle ; (c) collage des éléments via la colle en joignant le premier élément et la colle ; remarquable en ce qu'au moins un des deux éléments fournis est une tôle et comprend un écarteur, ledit écarteur étant conformé dans la tôle, le procédé comprenant en outre une étape (b) mise en attente de collage des éléments où l'écarteur vient au contact de l'autre des deux éléments de manière à maintenir à distance le premier élément de la colle ; puis lors de l'étape (c) collage l'écarteur est déformé de sorte à permettre le rapprochement entre la colle et le premier élément.

Selon des modes particuliers de réalisation, le procédé peut comprendre une ou plusieurs des caractéristiques suivantes, prises isolément ou selon toutes les combinaisons techniques possibles :
- À l'issue de l'étape (b) mise en attente, l'épaisseur de colle est inférieure à la hauteur de l'écarteur.
- L'écarteur comprend au moins une, préférentiellement au moins deux pattes disposées en extrémité de l'élément associé ; chaque patte est éventuellement inclinée par rapport au plan principal de l'élément associé.
- L'écarteur comprend au moins une bosse en élévation par rapport au plan général de l'élément associé, le bossage étant éventuellement un embouti.
- L'écarteur est associé au deuxième élément, préférentiellement le deuxième élément comprend deux faces principales opposées, l'écarteur faisant saillie par rapport à la face principale qui est du côté de la colle.
- Lors de l'étape (a) fourniture, chaque élément comprend un écarteur, et/ou chaque élément est recouvert de colle qui est collée à l'autre élément lors de l'étape (c) collage en joignant les éléments.
- Lors de l'étape (a) fourniture, la colle forme un cordon de colle, éventuellement plus épais qu'au moins un des éléments ; ou un film de colle plus fin que chacun des éléments.
- À l'issue de l'étape (c) collage, les éléments présentent une interface de collage, l'un des éléments présentant une portion principale et une portion auxiliaire formant l'interface, ladite portion auxiliaire étant décalée par rapport à la portion principale de sorte que cette dernière soit dans le prolongement de l'autre élément.
- Le procédé comprend une étape (d) soudage, ultérieurement à l'étape (c) collage, ou réalisée simultanément à l'étape (c) collage.
- L'écarteur et son élément associé sont venus de matière.
- L'écarteur comprend une zone charnière où il pivote, notamment en se déformant, la charnière forme éventuellement une jonction entre la partie principale de l'élément et l'écarteur.
- La structure est une caisse de véhicule.
- L'étape (b) mise en attente comprend au moins une des phases intermédiaires suivantes : (b1) mise en correspondance des surfaces de collage l'une en face de l'autre ; (b2) rapprochement des éléments de sorte à ce que l'écarteur touche l'autre élément. L'ordre peut être inversé, et ces phases intermédiaires peuvent être menées de front.
- L'étape (c) collage comprend au moins une des phases intermédiaires suivantes : (c1) application d'un effort déformant l'écarteur jusqu'à ce que la colle touche le premier élément ; (c2) maintien des éléments en pressant la colle ; et (c3) séchage de la colle.
- Les surfaces de collage sont généralement planes et sont rapprochées l'une de l'autre perpendiculairement à leurs surfaces de collage lors de l'étape (c) collage.
- À l'issue de l'étape (c) collage, chaque écarteur reste à distance de la colle.
- À l'issue de l'étape (b) mise en attente, les éléments ménagent entre eux un espace logeant la colle et l'écarteur, l'écarteur traversant davantage l'espace que la colle.
- Les éléments sont d'épaisseurs différentes, l'écarteur étant formé sur le plus mince, éventuellement chaque élément présente généralement une épaisseur constante.
- Lors de l'étape (c) collage, les éléments se rapprochent l'un de l'autre d'au moins 0,1 mm, préférentiellement au moins 0,50 mm, plus préférentiellement au moins 3 mm ; et/ou le rapprochement peut être supérieure à l'épaisseur du premier élément, préférentiellement au moins cinq fois supérieur. Le rapprochement peut être mesuré perpendiculairement au plan général de collage.

L'invention permet de conserver un écartement entre les tôles avant qu'elles ne soient définitivement collées. Elle ajoute un état intermédiaire d'attente de collage où les éléments restent « dé-plaqués ». Elle s'affranchit également de la géométrie de collage tout comme de l'épaisseur du cordon de colle. Cela simplifie leur mise en place l'une en face de l'autre, puis un éventuel ajustement des positions. Il devient également possible de disposer entre elles d'autres éléments. Elles peuvent également être transportées dans cet état pour subir d'autres procédés avant leur fixation définitive.

D'autres caractéristiques et avantages de la présente invention seront mieux compris à l'aide de la description donnée à titre d'exemple et en référence aux dessins parmi lesquels :
La figure 1 présente une structure de véhicule selon le premier mode de réalisation de l'invention où ses éléments sont dans un état de mise en attente de collage.
La figure 2 illustre une coupe de la structure suivant l'axe 2-2 tracé sur la figure 1 selon le premier mode de réalisation de l'invention.
La figure 3 esquisse la coupe de la structure suivant l'axe 2-2 selon le premier mode de réalisation de l'invention où les éléments sont collés.
La figure 4 montre une coupe de la structure selon le deuxième mode de réalisation de l'invention où ses éléments sont dans un état d'attente de collage.
La figure 5 montre une coupe de la structure selon le troisième mode de réalisation de l'invention où ses éléments sont dans un état d'attente de collage.
La figure 6 montre une coupe de la structure selon le troisième mode de réalisation de l'invention où les éléments sont collés.
La figure 7 représente un diagramme du procédé de collage selon l'invention.

Dans la description qui va suivre, la hauteur de l'écarteur est mesurée selon l'épaisseur de la colle, et/ou perpendiculairement à la surface de l'élément recevant la colle.

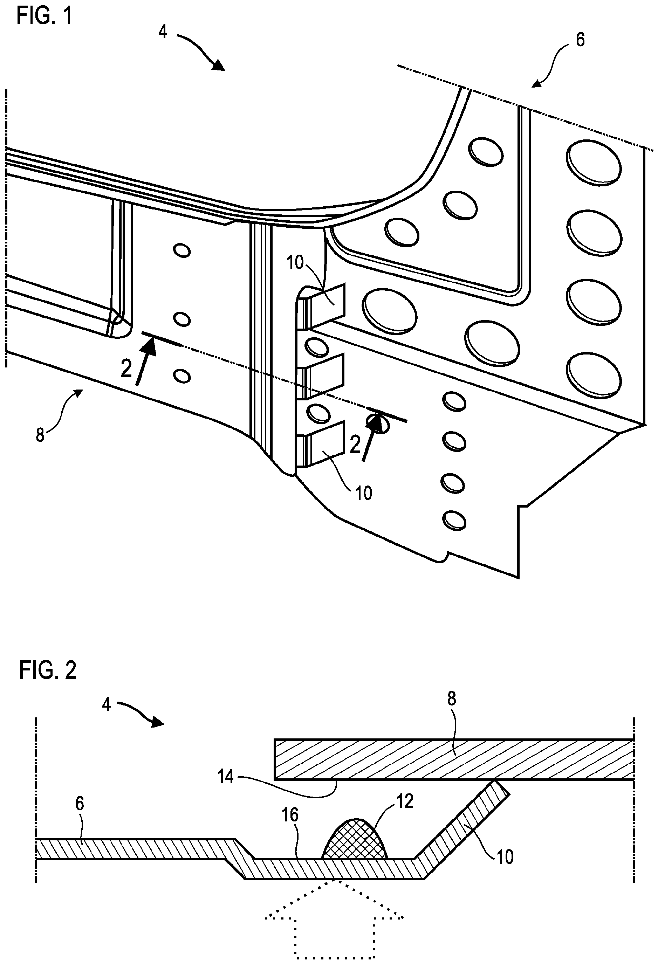

La figure 1 représente une portion de structure 4 de véhicule automobile en cours d'assemblage.

Cette structure 4 peut former une caisse de véhicule, elle peut présenter un ensemble d'éléments (6 ; 8) qui sont fixés les uns aux autres de sorte à délimiter l'habitacle et éventuellement une partie du châssis. Ces éléments (6 ; 8) peuvent être fixés les uns aux autres par soudage et par collage, ce qui matérialise un assemblage mixte.

La portion de structure 4 représentée peut être un longeron de caisse sur lequel est implanté un pilier, par exemple un pilier central qui s'étend verticalement. Le pilier comme le longeron peuvent être réalisés à l'aide de tôles embouties. L'invention peut également permettre de former d'autres parties d'un véhicule, par exemple la jonction entre un brancard et une traverse, et/ou avec un longeron. Les éléments peuvent être en alliage d'aluminium, ou en acier. L'emploi de polymère et de composite à matrice organique est envisagé. L'un des éléments peut être un bloc de matière.

Au moins un ou chaque élément (6 ; 8) est une tôle métallique. Éventuellement l'un des éléments est un bloc de matière, essentiellement rigide. Les éléments (6 ; 8) sont représentés dans un état de mise en attente, ils sont disposés l'un en face de l'autre en vue de leur fixation définitive par collage. Pour éviter que l'adhérence définitive n'ait lieu dans une configuration non conforme, l'un des éléments est muni d'au moins un écarteur 10. En l'occurrence, l'élément de gauche 8 présente trois écarteurs 10, par exemple formés par des pattes pliées vers l'autre élément. Il est évident pour l'homme du métier que les éléments fixés par la colle peuvent chacun être munis d'écarteurs 10. De même, il est envisageable de doter trois éléments, ou plus, de plusieurs écarteurs pour former un collage complexe.

La figure 2 représente une coupe de la structure 4 selon l'axe 2-2 tracé sur la figure 1. Un premier élément 6 fait face à un deuxième élément 8 qui présente un écarteur 10. L'espace entre les éléments enveloppe la colle 12 servant à leur fixation définitive et préférentiellement irréversible. L'écarteur 10 peut délimiter l'espace.

L'état représenté montre un positionnement en attente de collage des éléments (6 ; 8). L'écarteur 10 forme une extrémité du deuxième élément 8 en y marquant une cassure. L'écarteur 10 est généralement incliné par rapport à la zone collée. L'inclinaison par rapport à l'interface de collage peut être supérieure à 10°, préférentiellement supérieure ou égale à 30°. L'écarteur 10 maintient à distance le premier élément 6 en venant à son contact. Il forme une buttée, ou une saillie d'appui. Il permet d'écarter les surfaces de collage (14 ; 16) des éléments devant être collées, l'écart étant considéré selon l'épaisseur des éléments (6 ; 8). Plus précisément, l'écarteur 10 permet d'éloigner la première surface de collage 14 du premier élément 6 de la colle 12, et donc de l'éloigner de la deuxième surface de collage 16 du deuxième élément 8 pour éviter le collage des éléments (6 ; 8). L'écarteur 10 vise également à maintenir à distance la première surface 14 du sommet de la colle 12.

La colle 12 recouvre le deuxième élément 8, c'est-à-dire qu'elle l'enduit au moins partiellement et/ou localement. Elle peut former un cordon en surépaisseur, un film de colle sur une zone étendue. On entend par colle une substance ou une préparation capable de maintenir ensemble, par adhérence durable, les éléments en contact.

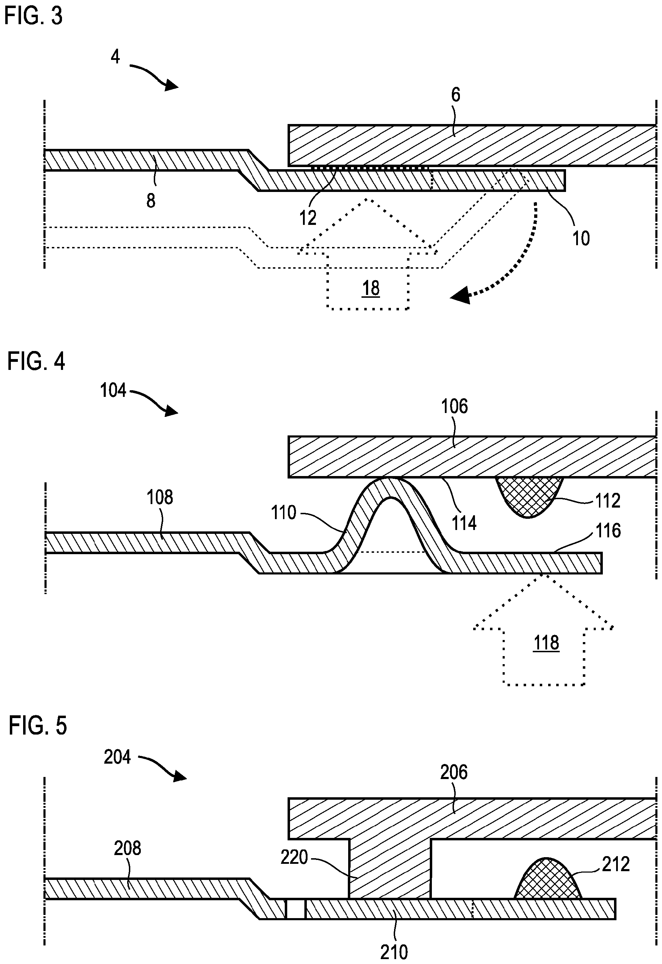

La figure 3 montre la portion de structure 4 de la figure 2 dans un état collé. Les éléments (6 ; 8) forment localement un laminé, telle une structure en sandwich où la colle 12 est un intercalaire de fixation.

Un effort de plaquage 18, ou effort de chargement, a été exercé sur les éléments (6 ; 8) au droit de la colle 12. L'effort 18 peut être appliqué sur l'un des éléments 8 ou sur chacun d'eux. Cet effort 18 tend à rapprocher les éléments (6 ; 8) et à refermer l'espace qui les séparait. Pendant l'application de cet effort 18, le ou chaque écarteur 10 est déformé, plastiquement et/ou élastiquement. Dans le cas d'une patte, celle-ci peut basculer. Elle vient progressivement épouser la surface en regard du premier élément. Elle devient tangente à la portion du deuxième élément sur laquelle elle est rajoutée.

Pendant le rapprochement des éléments, le cordon de colle 12 s'aminci jusqu'à devenir une pellicule. Le cordon 12 s'étale à l'interface et se réparti sur les surfaces (14 ; 16) à coller pour une meilleure adhérence. Malgré l'étalement, la colle 12 peut rester à distance de chaque écarteur 10.

Le deuxième élément 8 peut montrer une portion principale et une portion auxiliaire qui est décalée par rapport à la portion principale. La portion auxiliaire peut chevaucher le premier élément 6, et la portion principale peut la prolonger. Le décalage peut permettre aux faces supérieures d'être dans le prolongement l'une de l'autre ; ce qui permet d'y plaquer un autre élément, éventuellement collé.

La figure 4 représente une coupe de la structure 104 suivant un deuxième mode de réalisation de l'invention. Cette figure 4 reprend la numérotation des figures précédentes pour les éléments identiques ou similaires, la numération étant toutefois incrémentée de 100. La structure 104 est montrée en attente de collage.

La structure 104 peut être similaire à celle présentée en figure 1. Un premier élément 106 fait face à un deuxième élément 108 qui présente un écarteur 110. Bien qu'un seul écarteur 110 ne soit représenté, il est envisageable d'en prévoir plusieurs. La colle 112 et l'écarteur 110 peuvent être partagés sur les deux éléments (106 ; 108). Toutefois, il est envisageable que la colle 112 comme l'écarteur 110 soient tous deux sur le deuxième élément 108.

L'écarteur 110 peut être une bosse, tel un embouti conformé dans l'un des éléments 108. Il forme une vague dont le sommet vient en contact de l'autre élément 106. Les éléments (106 ; 108) pouvant être d'épaisseurs différentes, l'écarteur 110 peut avantageusement être formé sur le plus mince pour réduire les efforts nécessaires à la déformation, et pour éviter de déformer l'autre des deux éléments 106 lors du collage.

La paire d'éléments (106 ; 108) représentée peut subir un effort de plaquage 118 pour rapprocher les surfaces de collage (114 ; 116). Cet effort 118 peut écraser l'écarteur 110 pour appliquer la colle contre les deux éléments. Le résultat peut sensiblement permettre de former la portion de structure qui est représentée en figure 3.

La figure 5 représente une coupe de la structure 204 suivant un troisième mode de réalisation de l'invention. Cette figure 5 reprend la numérotation des figures précédentes pour les éléments identiques ou similaires, la numération étant toutefois incrémentée de 200. Des numéros spécifiques sont utilisés pour les éléments spécifiques à ce mode de réalisation. La structure 104 est représentée en attente de collage.

L'écarteur 210 peut être une patte. Il est intégré dans le contour général du deuxième élément 208, à distance des bords externes. L'extrémité libre de l'écarteur 210 peut s'étendre vers l'intérieur dudit élément 208. Dans l'état intermédiaire, l'écarteur 210 est logé dans l'épaisseur du deuxième élément 208.

De son côté, le premier élément 206 présente une calle 220 en contact de l'écarteur 210. La calle 220 peut être venue de matière avec le premier élément 206 qui y forme une surépaisseur locale. La calle 220 et l'écarteur 210 peuvent être ponctuels. Ils permettent, lorsqu'ils sont en contact, de ménager un espace entre les éléments (206 ; 208) où la colle 212 est protégée de tout contact prématuré ou accidentel.

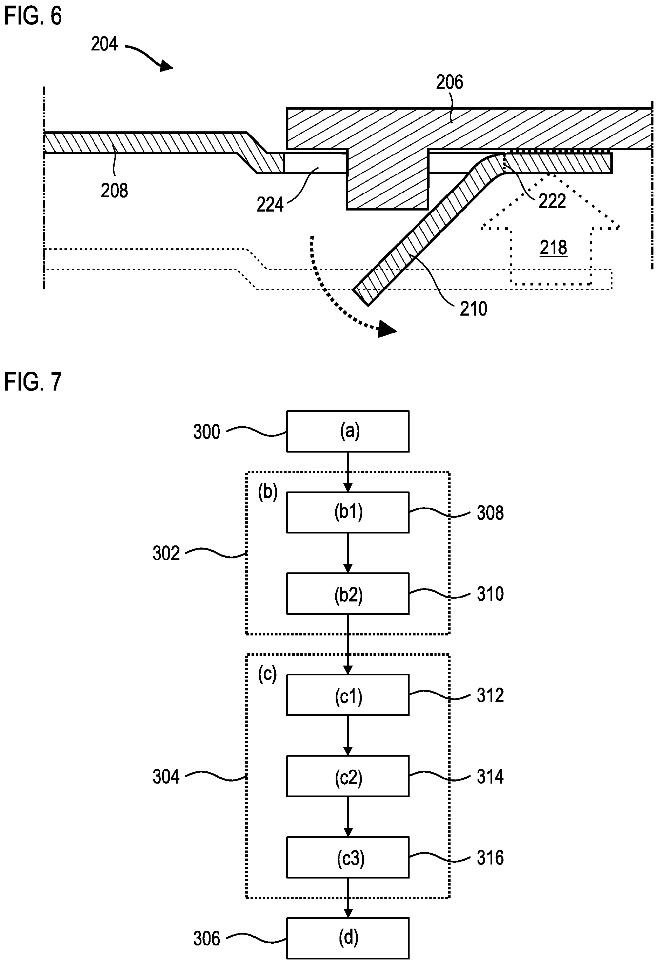

La figure 6 montre la portion de structure 204 de la figure 5 dans un état collé.

L'effort de plaquage 218 a rapproché les éléments (206 ; 208) l'un de l'autre de manière à plaquer leur surfaces de collage. La calle 220 a repoussé l'écarteur 210 en le déformant. L'écarteur 210 a tourné au niveau d'une zone charnière 222 permettant son basculement vers l'opposé du premier élément 206. La déformation de l'écarteur 210 ouvre une fenêtre 224 dans laquelle s'introduit la calle 220 à mesure que le premier élément 206 se rapproche.

Selon l'invention, il est possible de combiner les différents modes de réalisation. Des éléments à coller peut présenter chacun des écarteurs présentés ci-dessus, sur un même élément ou partagés sur les éléments. Les éléments sont répartis sur l'étendue de l'interface de collage pour ne par interférer.

La figure 7 représente un procédé de collage des éléments d'une structure. Le procédé peut s'appliquer aux structures détaillées dans les figures 1 à 6.

Le procédé de collage peut comprendre les étapes suivantes réalisées dans l'ordre qui suit :
(a) fourniture 300 d'un premier élément et d'un deuxième élément enduit de colle ;
(b) mise en attente de collage 302 des éléments en assurant un contact entre l'écarteur et l'autre des deux éléments de manière à maintenir à distance le premier élément de la colle ;
(c) collage 304 des éléments via la colle en joignant le premier élément et la colle, et en déformant l'écarteur de sorte à le repousser ;
(d) soudage 306 des éléments.

L'étape (a) fourniture 300 peut être une étape de fabrication des éléments. Les éléments pouvant être en tôles, ils peuvent être réalisés par coupage, par emboutissage. En particulier, l'écarteur peut être découpé simultanément avec le reste de l'élément correspondant. Selon l'invention, l'écarteur est conformé dans la tôle avec l'élément correspondant, par exemple par découpe, par pliage, par emboutissage, par tombage.

L'étape (b) mise en attente de collage 302 peut comprendre au moins une des phases intermédiaires suivantes: (b1) mise en correspondance 308 des éléments en disposant leurs surfaces de collage l'une en face de l'autre ; (b2) rapprochement 310 des éléments de sorte à ce que l'écarteur vienne en contact de l'autre élément. L'ordre peut être inversé.

L'étape (c) collage 304 peut comprendre au moins une des phases intermédiaires suivantes : (c1) application 312 d'un effort déformant l'écarteur jusqu'à ce que la colle touche le premier élément; (c2) maintien 314 des éléments en pressant la colle ; et (c3) séchage 316 de la colle. L'effort de plaquage entre les éléments peut être maintenu pendant une certaine période pour permettre à la colle d'atteindre son adhérence optimale.

Le soudage peut être réalisé pendant l'étape (c) collage 304, par exemple à partir de l'étape (c2) maintien 314 des éléments. L'étape (d) collage 306 est entièrement optionnelle. En effet, la fixation par collage peut suffire. Le soudage peut être employé pour fixer d'autres éléments, notamment un troisième élément et un quatrième élément.

## Revendications

1. Procédé de collage d'au moins deux éléments (6 ; 8 ; 106 ; 108 ; 206 ; 208) d'une structure (4 ; 104 ; 204) de véhicule, notamment d'un véhicule automobile, le procédé comprenant les étapes suivantes :
(a) fourniture (300) ou fabrication d'un premier élément (6 ; 106 ; 206), et d'un deuxième élément (8 ; 108 ; 208) recouvert de colle (12 ; 112) ;
(c) collage (304) des éléments (6 ; 8 ; 106 ; 108 ; 206 ; 208) via la colle (12 ; 112) en joignant le premier élément (6 ; 106 ; 206) et la colle (12 ; 112);
**caractérisé en ce qu'**au moins un des deux éléments (8 ; 108 ; 208) fournis est une tôle et comprend un écarteur (10 ; 110 ; 210), ledit écarteur (10 ; 110 ; 210) étant conformé dans la tôle,
le procédé comprenant en outre une étape (b) mise en attente de collage (302) des éléments (6 ; 8 ; 106 ; 108 ; 206 ; 208) où l'écarteur (10 ; 110 ; 210) vient au contact de l'autre des deux éléments (6 ; 106 ; 206) de manière à maintenir à distance le premier élément (6 ; 106 ; 206) de la colle (12 ; 112) ; puis
lors de l'étape (c) collage (304) l'écarteur (10 ; 110 ; 210) est déformé de sorte à permettre le rapprochement entre la colle (12 ; 112) et le premier élément (6 ; 106 ; 206).

2. Procédé selon la revendication 1, **caractérisé en ce qu'**à l'issue de l'étape (b) mise en attente (302), l'épaisseur de colle (12 ; 112) est inférieure à la hauteur de l'écarteur (10 ; 110).

3. Procédé selon l'une des revendications 1 et 2, **caractérisé en ce que** l'écarteur (10 ; 210) comprend au moins une, préférentiellement au moins deux pattes disposées en extrémité de l'élément associé ; chaque patte est éventuellement inclinée par rapport au plan principal de l'élément associé (8 ; 108 ; 208).

4. Procédé selon l'une des revendications 1 à 3, **caractérisé en ce que** l'écarteur (110) comprend au moins une bosse en élévation par rapport au plan général de l'élément associé (108), le bossage étant éventuellement un embouti.

5. Procédé selon l'une des revendications 1 à 4, **caractérisé en ce que** l'écarteur (10 ; 110 ; 210) est associé au deuxième élément (8 ; 108 ; 208), préférentiellement le deuxième élément (8 ; 108 ; 208) comprend deux faces principales opposées, l'écarteur (10 ; 110 ; 210) faisant saillie par rapport à la face principale qui est du côté de la colle (12 ; 112).

6. Procédé selon l'une des revendications 1 à 5, **caractérisé en ce que** lors de l'étape (a) fourniture (300), chaque élément (6 ; 8 ; 106 ; 108 ; 206 ; 208) comprend un écarteur, et/ou chaque élément est recouvert de colle (12 ; 112) qui est collée à l'autre élément (6 ; 8 ; 106 ; 108 ; 206 ; 208) lors de l'étape (c) collage (304) en joignant les éléments.

7. Procédé selon l'une des revendications 1 à 6, **caractérisé en ce que** lors de l'étape (a) fourniture (300), la colle (12 ; 112) forme un cordon de colle, éventuellement plus épais qu'au moins un des éléments (6 ; 8 ; 106 ; 108 ; 206 ; 208) ; ou un film de colle plus fin que chacun des éléments.

8. Procédé selon l'une des revendications 1 à 7, **caractérisé en ce qu'**à l'issue de l'étape (c) collage (304), les éléments présentent (6 ; 8 ; 106 ; 108 ; 206 ; 208) une interface de collage, l'un des éléments (8 ; 108 ; 208) présentant une portion principale et une portion auxiliaire formant l'interface, ladite portion auxiliaire étant décalée par rapport à la portion principale de sorte que cette dernière soit dans le prolongement de l'autre élément (6 ; 106 ; 206) .

9. Procédé selon l'une des revendications 1 à 8, **caractérisé en ce qu'**il comprend une étape (d) soudage (306), ultérieurement à l'étape (c) collage (304), ou réalisée simultanément à l'étape (c) collage (304).

## Patentansprüche

1. Verfahren zum Verkleben von mindestens zwei Teilen (6; 8. 106; 108; 206; 208) einer Struktur (4; 104; 204) eines Fahrzeugs, insbesondere eines Kraftfahrzeugs, wobei das Verfahren folgende Schritte umfasst:
(a) Bereitstellung (300) oder Herstellung eines ersten Elements (6); 106; 206) und einem zweiten Element (8; 108; 208) mit Klebstoff (12; 112.
(c) Kleben (304) der Elemente (6); 8. 106; 108; 206; 208) über den Klebstoff (12; 112) durch Verbinden des ersten Elements (6); 106; 206) und Klebstoff (12; 112);
**dadurch gekennzeichnet, dass** mindestens eines der beiden Elemente (8; 108; 208) ist ein Blech mit einem Abstandhalter (10; 110; 210), wobei der Abstandshalter (10; 110; (210) im Blech geformt ist,
Das Verfahren umfasst ferner den Schritt (b) Warten auf das Kleben (302) der Elemente (6); 8. 106; 108; 206; 208) mit dem Abstandhalter (10; 110; 210) mit dem anderen der beiden Elemente (6; 106; 206) derart, dass das erste Element (6) ferngehalten wird; 106; 206) des Leims (12; 112. Danach
in Schritt (c) Kleben (304) den Abstandhalter (10; 110; 210) derart verformt ist, dass eine Annäherung zwischen dem Klebstoff (12; 112) und das erste Element (6; 106; (206).

2. Verfahren nach Anspruch 1, **dadurch gekennzeichnet, dass** am Ende des Schrittes (b), der in Warteschleife (302) gesetzt wird, die Klebstoffdicke (12; 112) kleiner als die Höhe des Abstandhalters (10; (110).

3. Verfahren nach einem der Ansprüche 1 und 2, **dadurch gekennzeichnet, dass** der Abstandshalter (10; 210) mindestens eine, vorzugsweise mindestens zwei am Ende des zugeordneten Elements angeordnete Laschen umfasst; Jede Lasche ist gegebenenfalls in Bezug auf die Hauptebene des zugeordneten Elements (8; 108; (208).

4. Verfahren nach einem der Ansprüche 1 bis 3, **dadurch gekennzeichnet, dass** der Abstandhalter (110) mindestens einen Vorsprung aufweist, der in Bezug auf die Gesamtebene des zugeordneten Elements (108) ansteigt, wobei der Vorsprung gegebenenfalls ein Pressteil ist.

5. Verfahren nach einem der Ansprüche 1 bis 4, **dadurch gekennzeichnet, dass** der Abstandshalter (10; 110; 210) ist dem zweiten Element (8; 108; 208), vorzugsweise das zweite Element (8; 108; 208) mit zwei einander gegenüberliegenden Hauptseiten, dem Abstandhalter (10; 110; 210) gegenüber der kleberseitigen Hauptfläche (12) vorsteht; 112).

6. Verfahren nach einem der Ansprüche 1 bis 5, **dadurch gekennzeichnet, dass** in Schritt (a) Bereitstellen (300) jedes Element (6; 8. 106; 108; 206; 208) einen Abstandhalter aufweist und/oder jedes Element mit Klebstoff (12; 112), die mit dem anderen Element (6; 8. 106; 108; 206; 208) in Schritt (c) Kleben (304) durch Verbinden der Elemente.

7. Verfahren nach einem der Ansprüche 1 bis 6, **dadurch gekennzeichnet, dass** in Schritt (a) Bereitstellen (300) der Klebstoff (12; 112) bildet eine Klebernaht, die gegebenenfalls dicker ist als mindestens eines der Elemente (6; 8. 106; 108; 206; 208); Oder einen feineren Klebstofffilm als jedes einzelne Element.

8. Verfahren nach einem der Ansprüche 1 bis 7, **dadurch gekennzeichnet, dass** die Elemente nach Abschluss des Schrittes (c) Kleben (304) (6) aufweisen; 8. 106; 108; 206; 208) eine Klebeschnittstelle, eines der Elemente (8; 108; 208) mit einem Hauptteil und einem Nebenteil, die die Schnittstelle bilden, wobei der Nebenteil gegenüber dem Hauptteil so versetzt ist, dass dieser sich in der Verlängerung des anderen Teils (6) befindet; 106; (206).

9. Verfahren nach einem der Ansprüche 1 bis 8, **dadurch gekennzeichnet, dass** es einen Schritt (d) Schweißen (306), nachfolgend Schritt (c) Kleben (304) oder gleichzeitig mit Schritt (c) Kleben (304) umfasst.

## Claims

1. Packing process of at least two elements (6; 8; 106; 108; 206; 208) of a structure (4; 104; 204) of a vehicle, including a motor vehicle, the process comprising the following steps:
(a) supply (300) or manufacture of a first component (6); 106; 206), and a second element (8; 108; 208) covered with glue (12; 112);
(c) gluing (304) of the elements (6); 8; 106; 108; 206; 208) through glue (12; 112) by attaching the first element (6; 106; 206) and glue (12; 112);
**characterized in that** at least one of the two elements (8; 108; 208) supplied is a sheet and includes a gage (10; 110; 210), the said spacer (10; 110; 210) being conformed in the sheet,
the process including one step (b) stalling (302) of the elements (6); 8; 106; 108; 206; 208) where the spacer (10; 110; 210) comes into contact with the other of the two elements (6; 106; 206) in such a way as to maintain the first element at a distance (6; 106; 206) glue (12; 112); then
at step (c) gluing (304) the spacer (10; 110; 210) is distorted in such a way as to allow the connection between the glue (12; 112) and the first element (6; 106; 206).

2. Process according to Claim 1, **characterized by** that at the end of stage (b) put on hold (302), the glue thickness (12; 112) is less than the height of the gage (10; 110).

3. Process according to one of claims 1 and 2, characterized as the spacer (10; 210) includes at least one, preferably at least two legs arranged at the end of the associated element; each leg is sloped from the main plane of the associated element (8; 108; 208).

4. Process according to one of the claims 1 to 3, characterized as the gage (110) includes at least one hump in elevation compared to the general plane of the associated element (108), the boss being possibly a pitch.

5. Process according to one of the claims 1 to 4, characterized as the spacer (10; 110; 210) is associated with the second element (8; 108; 208), preferably the second element (8; 108; 208) consists of two opposing main faces, the spacer (10; 110; 210) protruding from the main face on the side of the glue (12; 112).

6. Process according to one of the claims 1 to 5, characterized as at stage (a) supply (300), each element (6; 8; 106; 108; 206; 208) includes a spreader, and/or each element is covered with glue (12; 112) which is glued to the other element (6; 8; 106; 108; 206; 208) at step (c) collage (304) by attaching the elements.

7. Process according to one of the claims 1 to 6, **characterized in that** at stage (a) supply (300), glue (12; 112) forms a cord of glue, possibly thicker than at least one of the elements (6; 8; 106; 108; 206; 208); or a film of glue finer than each element.

8. Process according to one of the claims 1 to 7, **characterized by** that at the end of step (c) collage (304), the elements present (6; 8; 106; 108; 206; 208) a collage interface, one of the elements (8; 108; 208) having a main and an auxiliary portion forming the interface, the said auxiliary portion being shifted from the main portion so that the latter is in the extension of the other element (6; 106; 206).

9. Process according to one of the claims 1 to 8, characterized as it includes a step (d) welding (306), later to step (c) gluing (304), or performed simultaneously to step (c) gluing (304).
